# EUROPEAN PATENT APPLICATION

(11) **EP 2 157 824 A1**
(43) Date of publication of application: **24.02.2010**
(21) Application number: 08014620.2
(22) Date of filing: 18.08.2008
(51) Int. Cl.: H04W 52/02

(54) **Network node, network and a method for waking up a network node**

(71) Applicant: Nokia Siemens Networks OY, 02610 Espoo (FI)
(72) Inventor: Forssel, Mika, 01150 Söderkulla (FI); Hämäläinen, Seppo, 02610 Espoo (FI); Michel, Jürgen, Dr., 81737 München (DE); Tang, Haitao, 02150 Espoo (FI)
(74) Representative: Bruglachner, Thomas E.

(57) **Abstract**

A network node (100) for connecting a network (105) with a terminal is described, wherein the network node (100) comprises a sleep control device (101). The sleep control device comprises a terminal linking device (103) and a network linking device (104).

The terminal linking device (103) is adapted to connect to a terminal (102), wherein the network linking device (104) is adapted to connect to a network (105). Furthermore, the network node (100) is adapted to enter a standby mode (302), wherein the sleep control device (101) is further adapted to switch on the network node (100) on appearing of at least one trigger event of (i) appearing of a predefined signal sequence (500) on the terminal linking device (103) during a monitoring period (309) of a listen cycle (307) or (ii) appearing of a terminal paging signal sequence (700, 900) on the network linking device (104). The sleep control device (101) is adapted to detect during the monitoring period (309) the predefined signal sequence (500) on the terminal linking device (103).

## Description

### Technical field of the invention

The present invention relates to the technical field of communication networks. In particular the present invention relates to a network node for connecting a network with a terminal, a method for waking up a network node, a program element for waking up a network node, a computer-readable medium for waking up a network node, a use of a paging block cycle for waking up a network node, a network and a network node comprising a terminal type sending device.

### Background of the invention

After the roll out of macro cellular mobile communication networks and ensuring a high coverage now ideas may exist to increase the coverage with micro cellular base stations, micro NodeBs, Home NodeBs (HNB, home NB) and Home evolved NodeBs (H(e)NB). Such micro NodeBs or micro base stations in particular may increase the coverage in private homes and thus, may not be used all the time.

Thus, during a day a variable traffic shape may exist in the network. This may lead to time periods during the day with a high capacity requirement and to other time periods with low capacity requirements. Independently whether it may be used or not, a (e)NB, a H(e)NB and/or a relay may generate costs by its power consumption. In particular a BTS, Base Station or a NodeB may generate a significant OPEX (Operational Expenditures) by its power consumption. It may also be required in the light of environmental aspects to reduce power consumption when BTS may not be used and thereby may reduce pollution.

In other words, a conventional network may comprise at least one macro Base Station. A macro Base Station may have been designed for covering a large cell area. However, a macro Base Station, which may provide more capacity than a micro Base Station, may not be able to serve high capacity demand and data rates at e.g. homes.

A conventional macro Base Station may not be designed for such high data rates or capacity needs. However, a micro Base Station may be used, which may be switched on in order to help the macro Base Station to cope with a high traffic load and which may be switched off during a time period in which less traffic may be generated. Therefore micro base station can be adaptive to varying traffic needs or a traffic shape generated from users during a period of time. A micro base station therefore may consume less energy if the micro Base Station may not need to carry substantially payload traffic.

An example for a micro Base Station may be a home NodeB or H(e)NB. Such a H(e)NB may be used in a user's home and may be switched off during the night time or when a user may not be at home. Only when for example the traffic density may increase again the micro Base Station or micro NodeB or H(e)NB may be waken-up again.

The H(e)NB may enter the sleep mode when a terminal, connected to the H(e)NB.or a terminal under the H(e)NB, may not have anything for sending or receiving.

Beside of the cost aspect of the operator the ecologically impact may have to be considered. A base station or NodeB may generate interference and electromagnetic radiation with possible impact to health of human beings.

Switching off the base station may not be a solution to this problem, since during the time a base station may be switched off, a mobile terminal may become unreachable since the terminal, the user terminal or UE may not be able to connect to the base station.

The document 3GPP (Third Generation Partnership Project), TSG RAN3 59, R3-080082, Italy 11-15 February 2008, "Capacity and coverage SON use case", describes recovery mechanisms following the detection of coverage holes.

A need may exist to provide a more efficient suspending of a network node.

### Summary of the invention

According to an exemplary embodiment of the present invention a network node for connecting a network with a terminal, a method for waking up a network node, a program element for waking up a network node, a computer-readable medium comprising a program code for waking up a network node, the use of a paging block cycle for waking up a network node, a network and a network node, e.g. a macro Base Station, comprising a terminal type sending device may be provided.

According to an exemplary embodiment of the present invention a network node may be provided, comprising a sleep control device. The sleep control device may comprise a terminal linking device and a network linking device. The terminal linking device may be adapted to connect to a terminal, and the network linking device may be adapted to connect to a network.

The terminal linking device may allow linking the network node to a terminal. The terminal linking device may comprise an air interface. The network linking device may allow linking the network node and a network. The network linking device may comprise an air interface, a wired interface or a wired connection.

The network node may be adapted to enter a sleep mode, a standby mode or a suspend mode and the sleep control device or the standby control device may be further adapted to switch on the network node on appearing of a trigger event.

In one example a trigger event may be appearing of a predefined signal sequence on the terminal linking device during a monitoring period of a sleeping cycle. During the monitoring period of the sleeping cycle, the sleep control device may be adapted to detect the predefined signal sequence on the terminal link.

In another example the trigger event may be appearing of a terminal paging signal sequence on the network linking device.

According to another exemplary embodiment of the present invention a method for waking up a network node may be provided. The method for waking up a network node may comprise connecting the network node to a terminal and/or connecting the network node to a network. The method may further comprise entering a sleep mode of the network node and switching on the network node on appearing of a trigger event.

Such a trigger event in one example may be the appearing or the appearance of a predefined signal sequence or signal pattern on the terminal linking device during a monitoring period of a sleeping cycle, wherein the sleep control device may be adapted during the monitoring period of the sleeping cycle to detect the predefined signal sequence on the terminal linking device.

In another example the trigger event, which may switch the network node on, may be appearing of a terminal paging signal sequence on the network linking device.

According to another exemplary embodiment of the present invention, a program element for waking up a network node may be provided, which program element, when being executed by a processor is adapted to carry out the method for waking up a network node.

According to another exemplary embodiment of the present invention, a computer-readable medium may be provided or a computer accessible medium may be provided comprising program code for waking up a network node, which program code, when being executed by a processor may be adapted to carry out the method for waking up the network node.

In an example the computer-readable medium may be a floppy disk, a harddisk, an USB (Universal Serial Bus) storage device, a RAM (Random Access Memory), a ROM (Read Only Memory) and an EPROM (Erasable Programmable Read Only Memory). A computer-readable medium may also be a data communication network, e.g. the Internet, which may allow downloading a program code.

According to another exemplary embodiment of the present invention, the use of a paging block cycle for waking up a network node may be provided. This use may comprise using a timing of the paging block cycle appearing in a paging channel for controlling a monitoring period of a sleeping cycle.

The paging block cycle may be used for initiating a call setup with a mobile terminal. The paging block cycle and in particular a corresponding message may be conducted in corresponding channels of the network node. From the timing in this channel, in particular from the message in this channel a timing for a listen cycle may be derived.

According to yet another exemplary embodiment of the present invention, a network may be provided. This network may comprise at least one network node, wherein the at least one network node may be adapted to generate a paging signal sequence for initiating a network originated call.

In another exemplary embodiment the network may comprise at least one network node, wherein the network node may comprise a terminal like transmitter device. In an example, the terminal like transmitter device may allow the network node to generate a predefined signal sequence for initiating a network originated call.

Thus, a network node such as a macro Base Station may generate at least one of a paging signal and a RACH signal as a network originated wake-up signal or as a network originated call. The network node may further be an eNodeB, a NodeB or a BS. The network thus may be an already existing conventional cellular network, which may be retrofitted by including terminal like devices in corresponding network nodes.

According to yet another exemplary embodiment of the present invention a network node may comprise a base station or a base station function and a terminal type sending device. The base station may control functions of the terminal type sending device for waking up a network node.

Thus, a functionality implemented for the use in a UE may be adapted to be used in a network node, e.g. in a NodeB, eNodeB, a base station or in a macro BS. For example a link to a controller in the macro BS may be installed or a corresponding firmware may be installed on a corresponding macro BS or network node.

An idea of the present invention may be to increase a transport capacity of a cell based network, e.g. a mobile network, provided by adding a micro base station, a NodeB, an eNodeB, a Home NodeB, a Home(e)NodeB or a relay. In particular, the eNodeB may be an eNodeB according to the LTE (Long-Term Evolution) standard. In order to save power the NodeBs may be switched on and off as required. Thus, just in the time when the capacity may be needed, capacity may be switched on.

In a particular example, in a private home environment an enhanced Home NodeB (H(e)NB) may not be used all the time. Thus, enabling a sleeping mode or a standby mode may help to save energy since in the sleeping mode functionalities not needed in the sleeping mode may be partially switched off, i.e. during a sleeping cycle the sleeping H(e)NB may switch between a sleeping state and a monitoring state.

During the sleeping state substantially major functions and radio functions of the network node may be switched off. Thus, during the sleeping mode may only keep-alive functions may be powered. The keep-alive functions may be functions which may allow the H(e)NB periodically to enter the monitoring state. Thus, the keep-alive features may comprise a timer.

In the monitoring state, major functions may be switched on, but most radio functions may still be switched off. Major functions may be functions which the H(e)NB may need to determine a predefined signal sequence such as a RACH preamble. Thus, the major functions may comprise a filter. Receiving. RACH signals may be an example of radio function which may be activated during the monitoring period.

The radio functions may comprise Radio Resource Management functions (RRM) such as handover management.

In the sleeping mode the H(e)NB may alternate between the sleeping state and the monitoring state. The sleeping state may consume less power then the monitoring state. The monitoring state may consume less power then the fully operational state. By extending the sleeping period, i.e. the time duration the network node may be in the sleeping state, the power savings may be increased.

Switching an eNodeB into a sleeping mode may also help to reduce electromagnetic radiation, interference and power consumption.

An eNodeB may be based on the frequency division duplex or the time division duplex (FDD, TDD) technology.

Switching on the standby mode or going into a standby mode may be easy for an (e)NB, a H(e)NB and/or a relay. Going into the standby mode may mean to switch off an active state or a fully operational state and enter a power saving mode, a standby mode or a sleeping mode.

A trigger for entering the standby mode may be determining an idle mode of the network node during a predetermined period of time. In other words, the fact, that no or reduced data may have been sent or received over a link or connection during a given time may initiate the sleeping mode and may initiate the sleeping cycle. A further trigger for entering the standby mode may be a manual trigger, a triggering signal or a remotely switch off.

In other words, the network node may allow reducing the power consumption by entering the standby mode. In the standby mode power substantially may be needed for regularly activating a monitoring state and for functions, which may be needed for the monitoring or filtering of a predetermined signal sequence. Power consumption may be further reduced by regularly activating and de-activating a sleeping state and by increasing the duration for the sleeping state. The sleeping cycle may be controlled by the sleep control device.

During the de-activation time of the sleeping state or during the monitoring time period of a sleeping cycle at least a part of the functions of a fully operational state may still be activated. During the monitoring period may only components be active which may allow determining a signal sequence. For example a terminal linking device may be activated whereas a network linking device may stay in the sleep state.

A sleeping cycle may run on the terminal linking device and/or on the network linking device. Thus, at least two sleeping cycles may be running in parallel. The at least two sleeping cycles may have different timings. Furthermore the at least two sleeping cycles may be synchronous or asynchronous.

Since the sleep control device may activate the monitoring state regularly, which may include activating a downlink and/or an uplink, during the sleeping state, neither an uplink nor a downlink may have to stay activated for monitoring at least one channel, such as a Random Access Channel (RACH).

According to an exemplary embodiment of the present invention at least two methods or two principles to activate a standby eNodeB over an air interface may be provided.

Each method may be implemented separately or both methods may be implemented at the same time. In other words, there may exist a network node within a network, which network node may use appearing of a predefined signal sequence on the terminal link device for waking up the network node. The presence of such a triggering event may be checked during a predefined time interval, e.g. during a monitoring period of a sleeping cycle.

A base station may also use a method of a UE to activate a standby eNodeB over an air interface.

In another example another network node of the network may exist, which may use the trigger event of appearing of a terminal paging signal sequence on the network linking device in order to wake up the network node from the,sleeping mode. Reacting to a paging signal may require permanently monitoring of a paging channel. In another example reacting to appearing of a terminal paging signal sequence may also comprise regularly alternating between a monitoring state and a sleeping state.

Entering a standby mode may also mean that the network node may be added to a communication network, while the network node may be in the sleep mode. In other words, a network node, e.g. a H(e)NB, in standby mode may mean that the radio functions of the network node may be switched off or that major functions and radio functions may be switched off. When the network node may be integrated in an existing network, the network node may be in the sleeping mode. Thus, bringing the network node into service after installation may comprise waking up the network node.

The method or the network node may differentiate between a network originated call and a mobile originated call or terminal originated call.

For a network originated call, a wide area (e)NB may wake up a H(e)NBs, a (e)NBs and/or a relay in case of network initiation. A wide area (e)NB may be a NodeB controlling other NodeBs. Network initiation may mean that a call or a wake up event may originate from the network.

In particular the wake up call may originate from at least one network node within the network, to which the sleeping network node may be connected. A network originated call may use paging a network node, in particular paging of a mobile like receiver device within a network node. Such a mobile like receiver device or an UE type receiver device may be integrated into the network node which may have to be woken-up, in particular into the network linking device. This mobile like receiver device may substantially only be needed for the FDD mode.

A network originated call may also comprise using a terminal like transmitter device or a mobile like transmitter device. The terminal like transmitter device may be integrated in a network node, which may wake-up another network node or terminal.

The network originated call may use an LTE paging procedure.

A mobile like receiver device or a UE type receiver may be a device integrated in the network linking device which may behave like a mobile terminal, like a terminal, like a user equipment, like an UE or like a mobile. During a paging procedure or a call setup procedure via the air interface it may be possible to wake up a user equipment. Thus, if such an UE like receiver device or mobile like receiver device may be integrated in the terminal linking device, the standard procedures for waking up a mobile terminal during a call setup may be used in order to wake up the network node.

In another example a mobile originated call may wake up the eNodeB by sending from a mobile terminal a predefined signal sequence to the terminal linking device. The terminal linking device may listen to or may monitor signals coming from the terminal and may identify a specific RACH preamble sequence as a predefined signal sequence.

In order to save energy or to reduce the energy consumption, the sleeping procedure may rarely activate the monitoring state. Rarely activating a monitoring state may mean periodically activating a procedure for monitoring an RACH channel with an increased time period between monitoring states or with a decreased rate. Thus, a duty ratio between a monitoring period and a sleeping period may be increased. The time period between monitoring states may be longer than a common time period between monitoring states, wherein during a monitoring state the RACH channel may be monitored.

According to another exemplary embodiment of the present invention, the trigger for entering the standby mode may be at least one standby condition selected from the group of expiring of a timer, the network node being in an idle mode for a predefined period of time and receiving a standby signal.

In an example being in an idle mode for a predefined period of time may mean that substantially no data may have been sent and/or received during a given period of time. Entering the standby mode may be manually or by remotely switching off the network node.

During the standby mode the network node may only keep functions running which functions may help to control a regularly waking up the network node to enter a monitoring state for a monitoring time period. The energy consumption or power consumption during the monitoring period may be lower than the energy consumption or power consumption during a fully operational mode. During the monitoring period, the network node, and in particular the sleep control device may monitor a link connected to the terminal linking device. The link may be an uplink, a downlink or an uplink and a downlink.

According to another exemplary embodiment of the present invention, the signal sequence appearing on the terminal linking device may be generated by a mobile terminal..

In an example the signal sequence appearing on the terminal linking device may be originated by a network node comprising a terminal type sending device, a UE sending device or a terminal like transmitter device.

Thus, a network node comprising a UE sending device or a UE TX device or a terminal sending device may be comparable to a UE. At least the signals sent by the network node may be comparable to the signals sent by a terminal. Therefore, features may be described for a UE may also apply for a network node comprising a UE sending device.

The terminal linking device may be connected to an interface of a mobile device or to an interface of a mobile user equipment. For example, the terminal linking device may be connected to an antenna allowing accessing a mobile terminal or UE via an air interface.

The UE may need to have connection to a network node in order to set up a call. In particular a mobile terminal may need a connection to a network node in order to set up an emergency call.

However, while a network node may be in a sleeping mode or in a power saving mode the network node may not be used by the terminal.

Thus, by sending a predefined signal sequence to the network node the terminal may be able to activate the network node. This may mean, that the terminal may wake the network node up, such, that the network node may enter a fully operational mode or a fully operational state. Once the network node enters the fully operational mode or the normal mode the user equipment may be able to connect to the network via the network node.

According to another exemplary embodiment of the present invention, the terminal linking device may comprise a Random Access Channel.

The Random Access Channel (RACH) may be used by a mobile terminal to indicate to a network node that the mobile terminal may desire to set up a connection. Monitoring the RACH may be used in order to detect that a mobile terminal may desire to access the network. Thus, activity on a random access channel may be an indication for the desire of a mobile terminal to enter a network via the network node in the sleeping mode. Thus, if the terminal linking device may monitor the RACH an early detection of a mobile terminal which may desire to set up a connection may be possible.

According to another exemplary embodiment of the present invention, the signal sequence may comprise at least one of a Random Access Channel preamble sequence and a Random Access Channel Connection setup message.

A Random Access Channel preamble sequence may be a signal which may allow to detect that a mobile terminal sending the Random Access Channel preamble sequence may desire waking up the node. Another signal sequence may be used to indicate a connection s,etup. The Random Access Channel preamble sequence may be sent by a terminal which may want to wake up a network node. Another signal sequence or a special signal sequence may be used, i.e. a signal sequence which may differ from a standardised signal sequence.

Detecting a Random Access Channel connection setup message on the RACH may be an indication, which indirectly be translated into a command for waking up a network node. In other words, whereas a special preamble sequence may clearly show that a terminal desire to wake up a network node, a random access channel connection setup message may indicate that a terminal desire to set up a call but the desire to wake up a network node may only be derived from the presence of the setup message.

According to another exemplary embodiment of the present invention, the sleeping cycle may be at least one cycle selected from the group of a random access channel cycle, a plurality of a Random Access Channel cycles and a paging block cycle.

The Random Access Channel cycle may be a cycle defined within a network node thus, the Random Access Channel cycle may be used as a regularly clock signal showing when the sleep control device may have to go online or to switch into the monitoring mode, the monitoring state or start the monitoring period. Using a plurality of lengths or durations of a of Random Access Channel cycle may allow to elongate the time during an activation of the network node. Thus, a dead time or sleeping period may be increased which may allow to decrease the frequency or rate of entering a monitoring state for monitoring or listening to a signalling channel for example. Increasing the dead time, i.e. the time in the sleeping state, may also mean more rarely monitoring a signalling channel, which may increase the power savings.

According to another exemplary embodiment of the present invention, the sleep control device may activate necessary radio actions in order to detect the predefined signal sequence.

A minimum radio activity, i.e. major functions, may have to be provided in order to detect that the terminal may signal to the network node that the terminal may desire to wake up the network node. A RACH sleeping cycle may correspond to a sleeping cycle.

The sleeping cycle may comprise regularly repetitive sleeping periods and monitoring periods. During the monitoring periods the radio functions such as handover handling may be switched off, however the major functions for detecting activity on the RACH may still be available.

Thus, during the monitoring period at least a reduced energy consuming state may be entered. The reduced energy consuming state may be a state consuming an amount of energy or power which is between an amount of power consumption during fully operational state and an amount of power consumption in the sleeping state.

According to another exemplary embodiment of the present invention, the network linking device may further comprise a terminal type receiver device or a mobile like receiver device.

A terminal type receiver device, a UE type receiver device or a mobile like receiver device may be a functionality of a mobile device integrated into a network node, e.g. in a H(e)NB. This functionality may be the at least functionality or a minimal functionality necessary to receive and to detect the paging call from the network.

The UE type receiver device may allow a H(e)NB to receive a paging message. Thus, the macro BS may be able to send a paging message to the H(e)NB.

During connection setup the network may need to page a mobile terminal. In other words, a mobile network may not know the exact location of the mobile node. Thus, a network node or a macro BS may use a paging procedure in order to locate a corresponding user equipment or UE.

A user equipment may also reduce a power during a time the user equipment may not be used in order to save energy. Thus, receiving a paging signalling information from a network, may bring a user terminal in an operational mode in order to receive an incoming call for example. By integrating the mobile like device in the network node, this functionality may be used in the network node.

When a UE is paged by the macro BS, a corresponding network node or H(e)NB may receive a paging message from the macro BS in parallel to the UE. As a result of receiving the paging message from the macro BS the H(e)NB may start its wake-up procedure and the UE may first connect to the macro BS. Later, when the H(e)NB may have become active or may have entered the fully operational state, the macro BS may perform a handover to HeNB. Thus, a cell coverage may be amended or the capacity within a cell may be increased.

A terminal type sending device or a mobile like sending device may be a functionality of a mobile device integrated into a network node, e.g. integrated into a macro BS, wherein this functionality may be the at least functionality or a minimal functionality necessary to send the RACH call to the network node, e.g. to the H(e)NB.

When a UE is paged by the macro BS, a corresponding network node or H(e)NB may receive a RACH message from the macro BS in parallel to paging of the UE. As a result of receiving the RACH message from the macro BS the H(e)NB may start its wake-up procedure and the UE may first connect to the macro BS. Later, when the H(e)NB may have become active or may have entered the fully operational state, the macro BS may perform a handover to HeNB. Thus, a cell coverage may be amended or the capacity within a cell may be increased.

According to another exemplary embodiment of the present invention, the network node may be at least one network node selected from the group of network nodes consisting of a Long-Term Evolution (LTE) network node, a Frequency Division Duplex (FDD) network node, a Time Division Duplex (TDD) network node, a Home NodeB, a Home evolved NodeB, a NodeB, a macro Base Station, a micro Base Station, a pico Base Station and a relay.

It has also to be noted that exemplary embodiments of the present invention and aspects of the invention have been described with reference to different subject-matters. In particular, some embodiments have been described with reference to apparatus type claims whereas other embodiments have been described with reference to method type claims. However, a person skilled in the art will gather from the above and the following description that unless other notified in addition to any combination between features belonging to one type of subject-matter also any combination between features relating to different subject-matters in particular between features of the apparatus claims and the features of the method claims may be considered to be disclosed with this application.

In particular features, which may have been described with respect to a UE and a corresponding H(e)NB may also apply for a network node comprising a terminal like transmitter device. Furthermore, features which may have been described with respect to a communication from a macro Base Station to a UE may also apply for a communication from the Base Station to the H(e)NB.

These and other aspects of the present invention will become apparent from and elucidated with reference to the embodiments described hereinafter.

Exemplary embodiments of the present invention will be described in the following with reference to the following drawings.

### Brief description of the drawings

Fig. 1 shows a block diagram for a network node building the link between a network and a mobile terminal according to an exemplary embodiment of the present invention.
Fig. 2 shows a message flow diagram for a method for waking up a network node according to an exemplary embodiment of the present invention.
Fig. 3 shows a timing diagram showing a sleeping cycle according to an exemplary embodiment of the present invention.
Fig. 4 shows a block diagram of a network comprising a network node in a sleeping mode according to an exemplary embodiment of the present invention.
Fig. 5 shows a block diagram of a network comprising a UE initiating a session according to an exemplary embodiment of the present invention.
Fig. 6 shows a block diagram of a network comprising a macro base station having a mobile like transmitter and network node listening to a Random Access Channel according to an exemplary embodiment of the present invention.
Fig. 7 shows a block diagram of a network comprising a macro base station initiating a wake-up according to an exemplary embodiment of the present invention.
Fig. 8 shows a block diagram of a network comprising a network node with a mobile like receiver device according to an exemplary embodiment of the present invention.
Fig. 9 shows a block diagram of a network comprising a macro base station initiating a session according to an exemplary embodiment of the present invention.

### Detailed description

The illustration in the drawings is schematic. In different drawings, similar or identical elements are provided with the same reference numerals.

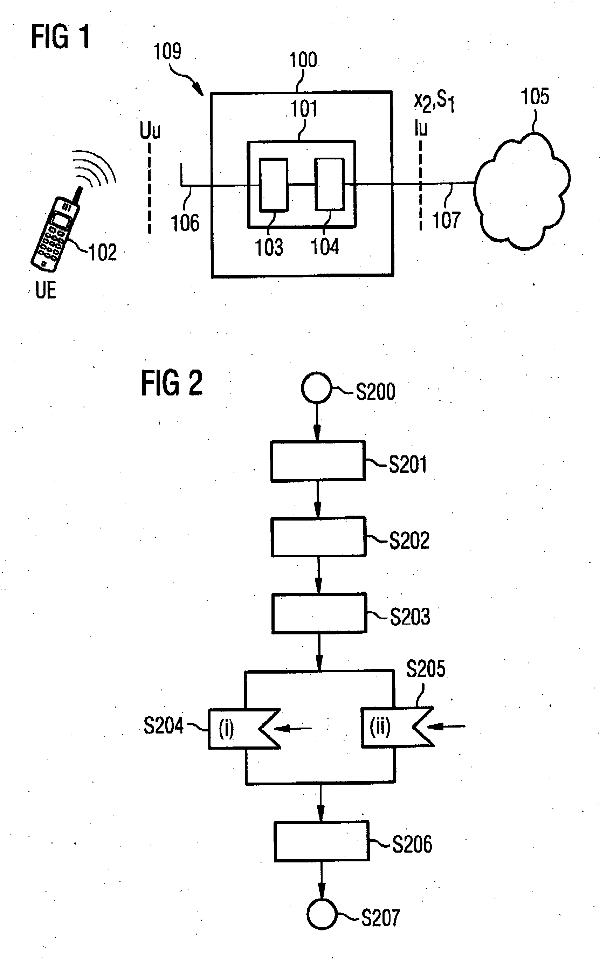

Fig. 1 shows the UE 102 desiring connection to the network 105. The network node 100 may be a micro BS or H(e)NB and may comprise the sleep control device 101, which comprises the terminal linking device 103 and the network linking device 104. The terminal linking device 103 further comprises the antenna 106 which allows the user equipment UE, 102 to connect to the network node 100 via the air interface Uu.

The sleep control device 101 further comprises the network linking device 104 which allows the network node to connect via link 107 to the network 105 or to the RAN (Radio Access Network). The link 107 may be a X2, a S1 or an Iu interface.

The network node 100 may be a Home eNodeB 100. This means connectivity for the UE 102 to the network 105 may not have to be provided all the time. For example, during night time the network node 100 may enter a sleeping mode or a standby mode. In the sleeping mode or sleep mode a power consumption of the network node 100 may be reduced in order to save costs.

The network 105 may be a cellular network comprising macro BSs. The individual macro BSs are not shown in Fig. 1.

The UE 102, the network node 100 and the network 105 may be part of a network system 109 or a network access system 109.

In one example the UE 102 may want to set up a call to the network 105.

For such an UE originated call or a mobile originated call the eNodeB 100 or network node 100 may need to be waken up from the user equipment 102. For example, the UE 102 can use a specific RACH preamble or a standard RACH preamble sequence which the user equipment 102 may send via link 106 to the terminal linking device 103 in order to wake up the network node 100. In parallel, the RACH preamble may be received by the network 105.

In another example the network node 100 may use a RACH sleeping cycle period in order to enter an operational mode, i.e. in order to wake up the network node 100. For example, usual channel request transmission waiting time or sleeping period duration on a RACH 106 may have values in the range of ms (milliseconds). This means, that if such a sleeping cycle period or RACH sleeping cycle period may be used, the network node may have to leave every millisecond the sleeping state in order to monitor whether activity may be on link 106 or whether'a specific RACH preamble sequence may be detected on link 106.

In order to save energy however, the RACH sleeping cycle period may be extended compared to a standard basic RACH sleeping cycle period. The RACH sleeping cycle period or the monitoring cycle period may be a plurality for basic RACH sleeping cycle periods. The network node 100, the H(e)NB, the (e)NB and/or the relay in a standby mode may use such an elongated RACH period to receive connection setups.

A further example of an elongated period may be the paging block cycle period in the paging channel. The paging block cycle may have a duration of 1 second, 2 seconds, 5 seconds or any other appropriate duration. Thus, a monitoring cycle period of the terminal linking device 103 may appear in the range of seconds. The timing of the sleeping cycle may be aligned with the timing of the paging channel. The paging channel may be used to set up a call within a network node.

During every RACH cycle period or during every regular sleeping cycle the network node 100 may listen for the predefined monitoring period to any incoming communication on the RACH channel. Thus, the minimum requirements for monitoring the RACH channel may be activated within the network node 100 during the monitoring period. Since the monitoring period may be the only time of activation during a standby cycle, the energy or power consumed by the network node may be reduced.

If a RACH connection setup message may be detected on the terminal linking device 103 during the monitoring period the network node would come back to normal operation, i.e. to a fully operational state.

Thus, an idea of the present invention may be seen in the network node rarely monitoring an incoming communication, e.g., on link 106. Rarely may mean monitoring on an increased cycle time period compared to a standard cycle time. Furthermore, interference and electromagnetic radiation may be reduced.

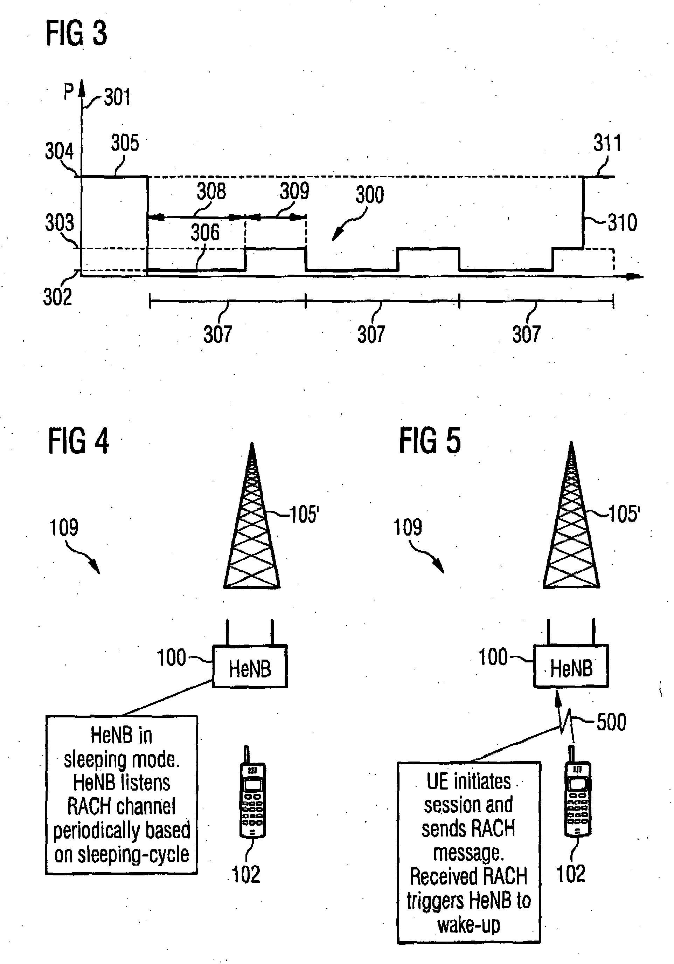

According to another example the network 105 may want to deliver a call to UE'102, while network node 100 is in the sleeping mode, i.e. while the network node may execute the sleeping cycle. For such a network originating call, the network 105 can page the network node 100, in order to wake up the network node 100. The network 105, in particular a network node or macro BS (not shown in Fig. 5) within the network 105 , may use a paging procedure for generate a paging signal and paging the network node 100. This paging procedure may be a general paging procedure, which the network 105 may usually use for paging a UE 102. The network node 100 detecting a paging signal or a paging signal sequence generated by the network 105 may leave the standby mode and may enter a fully operational mode.

In particular the network 105 pages a UE type receiver or a mobile like receiver (not shown in Fig. 1) within the network linking device 104. This UE type receiver in cooperation with the sleep control device 101 may wake up the network node 100. Thus, having implemented an UE type receiver device, the network node 100 in the direction to the network 105 may act like a simple mobile 102 or a common UE 102 which may update a paging location or a tracking location to the network. The UE type receiver device may be activated all the time. The UE type receiver device may comprise the minimum functionality required to conduct the sleeping cycle. Furthermore, only a receiving function within the UE type receiver device may be activated. In another example the UE type receiver device may be activated comparable with the sleeping cycle.

Thus, the network node 100 for the network 105 acts like a simple mobile terminal that updates its paging/tracking location to the network 105 and which UE 102 listens to the paging channel of the network 105. If the paging message is provided to the network node 100 in the standby mode, the sleep control device 101 may activate the network node 100 from standby mode back to normal operation mode.

The format of the RACH is specific for the wake up RACH and the procedure between a base station 100 or network node 100 and the paging centre (e.g., at MMS (Multi Media Messaging Service), not shown in Fig. 1) can be a standardized message. The BCH (Broadcast Channel) can contain the cell disable capability information which can be read.

The system 109 shown in Fig. 1 may comprise an LTE NodeB 100.

Fig. 2 shows a method for waking up a network node 100 wherein the message starts in an operation mode in step S200.

In step S201 the network node is connected to a terminal, e.g. to a user terminal UE 102. In step S202 the network node is connected to a network 105.

In step S203 a network node may enter a sleep mode, i.e. the network node conducts a sleep cycle.

In step S204 a predefined signal sequence on the terminal linking device 103 appears during a monitoring period of the network node, wherein during the monitoring period a sleep control device 101 may be adapted to detect a predefined signal sequence on the terminal link 106.

In step S205 a paging terminal signal appears on network link 107.

As well appearing of a predefined signal during a monitoring period and appearing of a paging signal on a network link 107 may wake a network node 100 up from a sleeping mode.

Therefore, in step S206 the network node is in an active state and the method ends in step S207, which is an operational mode or a fully operational state.

In Fig. 3 a timing diagram according to an exemplary embodiment of the present invention is shown in order to illustrate the timing of the monitoring period 309.

The figure in Fig. 3 shows a time diagram 300 having an abscissa showing the time t and an ordinate showing a power of a power consumption of a network node P 301. The time diagram 300 may be an extract of a sleeping cycle 300, 307 of a network node 100.

As can be seen on the scale of the abscissa 301 the power P in the different states 302, 303, 304 of a network node varies between the three different power modes 302, 303, 304. The standby power mode 302 or sleeping state 302, the monitoring power mode 303 or monitoring state 303 and the fully operational power mode 304 or the fully operational state 304 may be differentiated.

The sleeping procedure shown in Fig. 1 starts in the fully power mode 305. In this mode the network node 100 may handle radio functions or RRM functions such as handling of a handover. During the fully power mode 305 the network node is in the fully power state 305.

A trigger signal brings the network node into the sleep mode 306 of a sleeping cycle 307. During the sleep mode, the network node switches between the standby state 302 and the monitoring state 303.

During the sleep mode a sleeping cycle 307 may run. The sleeping cycle 307 comprises the dead time 308 or sleeping period time 308, which may be a Channel Request transmission waiting time 308.

The sleeping cycle period 307 also comprises the monitoring period 309. During the monitoring period 309 the network node 101 leaves the standby state 302 and enters a monitoring state 303. During the monitoring state 309 all necessary radio actions for detecting an activity on the terminal linking device 103 are activated. If no predefined signal sequence appears, the network node returns in the sleeping sate 302.Thus, by setting a duty ratio between sleeping period 308 and monitoring period 309 the grade of power saving may be set.

The sleeping cycle 307 repeats until during the monitoring period a defined signal sequence is detected 310. This signal sequence indicates receiving of a mobile originated call by the network 100. Immediately after detecting the mobile originated call or the mobile originated call setup 310 the network node 100 leaves the monitoring state 303 and enters the fully operational state 304, 311 as shown in Fig. 3 dur ing the monitoring period.

Fig. 4 shows the network node 105' or macro BS 105' being part of the network 105 (the network not shown in Fig. 4). Furthermore, the UE 102 and the H(e)NB 100 or HeNB 100 are shown. The HeNB 100 is in sleeping mode 302 and listens on the RACH channel periodically based on the sleeping-cycle 307. In the sleeping mode, the HeNB switches between the sleeping state 302 and the monitoring state 303.

In Fig. 5 the network system 109 comprises the network node 105', the HeNB 100 and the UE 102. The UE 102 initiates a session by sending an RACH signal 500 or an RACH message 500 to the HeNB 100. The HeNB 100 receives this RACH message and this received RACH message triggers the HeNB to wake-up and to become operational. Thus, Fig. 5 may show an UE initiated connection setup or a mobile originated call 500.

The message 500 is a special RACH preamble sequence, i.e. it may differ from a standard RACH preamble sequence.

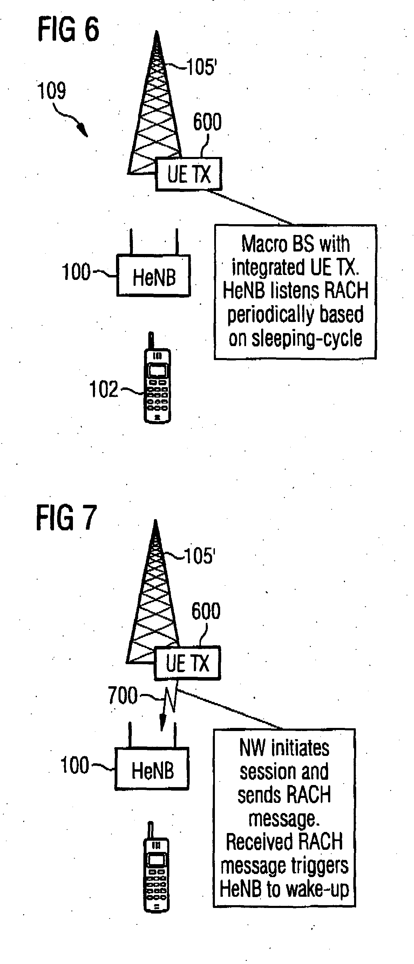

In Fig. 6, the network system 109 from Fig. 5 is shown. The network node 105' or the macro BS 105' comprises the terminal type sending device 600 or the UE TX device 600. The UE TX device 600 is adapted to send RACH 500 to a H(e)NB 100. The UE TX device 600 may comprise a transmitter chain of a UE and is integrated into the network node 105', the macro BS 105', the eNodeB105', the NodeB 105'or the base station 105'. Thus, the network node 105' is equipped with the integrated UE TX (transmit) device 600. Thus, for the H(e)NB 100 the macro BS 105' looks like a UE since the macro BS 105' sends the same signals as a UE 102 for waking up the H(e)NB 100. In other words, a network originated call looks like a UE originated call.

During a sleeping mode, the H(e)NB 100 monitors periodically the RACH based on a sleeping cycle . In the example shown in Fig. 6 macro BS 105' uses UE TX 600 to wake-up H(e)NB 100 instead of UE 102 waking-up the H(e)NB 100. The UE TX 600 may be the transmitting device of an UE 102 of Fig. 5. The macro BS 105' stays switched on, thus, the macro BS 105' may not benefit from energy savings or power savings. But H(e)NB 100 does benefit.

In Fig. 7, the macro BS 105', in particular the UE TX 600 of macro BS 105' initiates a call 700. Since the network node 105' may be part of a network 500, Fig. 7 shows a network originated call 700. H(e)NB 100 however, may not differentiate between a mobile originated call and a network originated call 700, coming from UE TX 600.

For initiating a session the UE TX 600 sends an RACH message 700 to the HeNB. Receiving this RACH message 700 or paging message 700 triggers the HeNB 100 to wake-up.

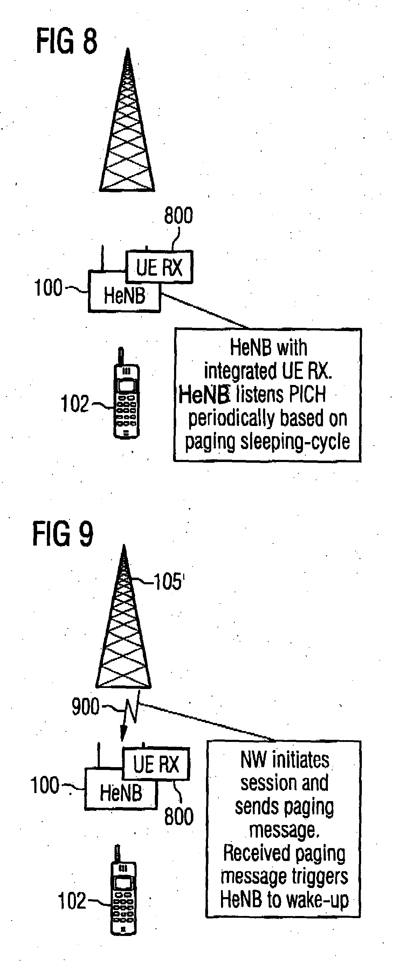

The HeNB 100 shown in Fig. 8 comprises the integrated UE RX (receiver) device 800 or the UE type receiver 800. The UE RX may be a receiver chain of a UE 102. The UE RX device 800 listens on the PICH (Paging Indicator Channel) periodically based on a paging sleeping-cycle comparable to the sleeping cycle 307 shown in Fig. 3.

The network linking device 104 may comprise the UE RX device 800 and the control device 101 may control the UE RX device 800 and/or be controlled by the UE RX device 800.

Without UE RX, HeNB 100 or H(e)NB 100 may not monitor or listen to downlink signals from macro BS 105'. The UE RX device, integrated in HeNB 100 allows the HeNB 100 to receive downlink signals, in particular the PICH (Paging Indicator Channel).

Thus, HeNB 100 and UE 102 may receive downlink signals 900 in parallel. In an example, the UE 102 may first connects to macro BS 105'. After the HeNB 100 has been waken up or has become online, the macro BS 105' hand over the UE 102 to the HeNB 100.

As soon as the network node 105' initiates a session by sending a paging message 900 and the UE RX device 800 receives this paging message 900 a wake-up of the HeNB 100 is initiated as shown in Fig. 9.

It should be noted that the term "comprising" does not exclude other elements or steps and the "a" or "an" does not exclude a plurality. Also elements described in association with different embodiments may be combined.

It should also be noted that reference signs in the claims shall not be construed as limiting the scope of the claims.

## Claims

1. Network node (100) for connecting a network (105) with a terminal (102), the network node (100) comprising:
a sleep control device (101);
the sleep control device (101) comprising:
a terminal linking device (103);
a network linking device (104);
wherein the terminal linking device (103) is adapted to connect to a terminal (102);
wherein the network linking device (104) is adapted to connect to a network (105);
wherein the network node (100) is adapted to enter a sleep mode (302);
wherein the sleep control device (101) is further adapted to switch on the network node (100) on appearing of at least one trigger event of
(i) appearing of a predefined signal sequence (500) on the terminal linking device (103) during a monitoring period (309) of a sleeping cycle (307);
wherein the sleep control device (101) is adapted to detect the predefined signal sequence (500) on the terminal linking device (103) during the monitoring period (309); and of
(ii) appearing of a terminal paging signal sequence (700, 900) on the network linking device (104).

2. Network node (100) of claim 1, wherein the a trigger for entering the standby mode (302) is at least one standby condition selected from the group of expiring of a timer, the network node being in an idle mode for a predefined period of time and receiving a standby signal.

3. Network node (100) of claim 1 or 2, wherein the signal sequence appearing on the terminal linking device (102) is generated by a mobile terminal (102) and/or by a terminal type sending device (600).

4. Network node (100) of one of claims 1 to 3, wherein the terminal linking device (103) comprises a Random Access Channel (500).

5. Network node (100) of one of claims 1 to 4, wherein the signal sequence (500) comprises at least one of a Random Access Channel preamble sequence and a Random Access Channel connection setup message.

6. Network node (100) of one of claims 1 to 5, wherein the sleeping cycle (307) is at least one cycle selected from the group of cycles consisting of a Random Access Channel cycle, a plurality of a Random Access Channel cycles and a paging block cycle.

7. Network node (100) of one of claims 1 to 6, wherein the sleep control device (101) in order to detect the predefined signal sequence activates necessary radio actions.

8. Network node (100) of one of claims 1 to 7, the network linking device (104) further comprising:
a terminal type receiver device (800).

9. Network node (100) of one of claims 1 to 8, wherein the network node (100) is at least one network node selected from the group of Long Term Evolution network node, a Frequency Division Duplex network node, a Time Division Duplex Network node, a Home NodeB, a Home evolved NodeB, a NodeB, a macro Base Station, a micro Base Station, a pico Base Station and a Relay.

10. A method for waking up a network node (100), comprising:
connecting the network node (100) to a terminal (102);
connecting the network node (100) to a network (105);
entering a sleep mode (306) of the network node(100);
switching on the network node (100) on appearing of at least one trigger event of
(i) appearing of a predefined signal sequence (500) on the terminal linking device (103) during a monitoring period 309);
wherein the sleep control device (101) is adapted to detect the predefined signal sequence (500) on the terminal linking device (103) during the monitoring period (309); and of
(ii) appearing of a terminal paging signal sequence (700, 900) on the network linking device (104).

11. Program element for waking up a network node, which when being executed by a processor is adapted to carry out the method of claim 10.

12. Computer-readable medium comprising program code for waking up a network node, which when being executed by a processor is adapted to carry out the method of claim 10.

13. Use of a paging block cycle for waking up a network node of one of claims 1 to 9, comprising:
Using a timing of the paging block cycle in a paging channel for controlling a monitoring period.

14. Network (105) comprising:
at least one network node (100, 105');
wherein the at least one network node (100, 105') is adapted to generate a paging signal sequence for initiating a network originated call ; and /or
wherein the least on network node (100, 105') comprises a terminal like transmitter device (UE TX);
wherein the terminal like transmitter device (UE TX) allows the network node (100, 105') to generate a predefined signal sequence for initiating a network originated call.

15. Network node (105') comprising:
a base station;
a terminal type sending device (600).
wherein the base station controls functions of the terminal type sending device for waking up a network node (100).
